# EUROPÄISCHE PATENTSCHRIFT

(11) **EP 3 616 296 B1**
(45) Veröffentlichungstag und Bekanntmachung des Hinweises auf die Patenterteilung: **01.05.2024**
(21) Anmeldenummer: 18726032.8
(22) Anmeldetag: 27.04.2018
(51) Int. Cl.: H02J 7/00

(54) **VERFAHREN UND VORRICHTUNG ZUM BATTERIEMANAGEMENT SOWIE BATTERIE MIT INTEGRIERTER VORRICHTUNG ZUM BATTERIEMANAGEMENT**
METHOD AND DEVICE FOR BATTERY MANAGEMENT AND BATTERY COMPRISING A BUILT-IN DEVICE FOR BATTERY MANAGEMENT
PROCÉDÉ ET DISPOSITIF DE GESTION DE BATTERIE ET BATTERIE COMPRENANT UN DISPOSITIF INTÉGRÉ POUR LA GESTION DE BATTERIE

(30) Priorität: 28.04.2017 DE 102017004569
(43) Veröffentlichungstag der Anmeldung: 04.03.2020
(73) Patentinhaber: GENEREX SYSTEMS Computervertriebsgesellschaft mbH, 22041 Hamburg (DE)
(72) Erfinder: Blettenberger, Frank, 22047 Hamburg (DE)
(74) Vertreter: Klickow & Wetzel PartGmbB
(86) Internationale Anmeldenummer: PCT/DE2018/000125
(87) Internationale Veröffentlichungsnummer: WO 2018/196898

(56) Entgegenhaltungen:
- DE-A1-102014 106 795
- DE-A1-102015 109 168
- US-A1- 2014 285 022
- US-A1- 2014 347 014

## Beschreibung

Bevorzugt basiert die Batterie auf der bestehenden Blei-Gel-Technologie. Die Batterie weist bevorzugt die Fähigkeit auf, den Spannungsverlauf und die Temperatur über eine erwartete Lebensdauer von 10 Jahren über RFID oder über das Batteriemanagement System auszulesen. Neben der Integration einer Vorrichtung zum Batteriemanagement ist allgemein an die Integration eines Verfahrens zum Batteriemanagement in die Batterie gedacht.

Verfahren und Vorrichtungen zum Batteriemanagement werden beispielsweise bereits in der DE 10 2004 013351 beschrieben. Es wird dort insbesondere eine Reihenschaltung von Bleiakkumulatoren beschrieben, wobei für die einzelnen Akkumulatoren ein Ladungsausgleich möglich ist. Jedem der Akkumulatoren ist hierbei ein Akku-Modul in einer parallelen Schaltungsanordnung zugeordnet. Die Akku-Module stellen eine steuerbare Impedanz bereit. Hierdurch wird es ermöglicht, in Abhängigkeit von der steuerbaren Impedanz einen Bypassstrom zu generieren.

Gemäß ebenfalls bereits bekannten rein passiven Impedanzen, die den relativ zueinander in Reihe geschalteten Akkumulatoren jeweils parallel geschaltet sind, kann durch die steuerbaren Impedanzen zwar bereits ein erheblicher Fortschritt in Richtung auf eine Verlängerung der Lebensdauer der Akkumulatoren erreicht werden, es zeigt sich jedoch, dass die zunehmend steigenden Anforderungen an eine Verlängerung der Standzeiten der Akkumulatoren und eine hochgenaue Ladungsverteilung durch den Stand der Technik noch nicht erfüllt bzw. erreicht werden können.

Aus der US 2014/347014 A1 ist bereits ein Verfahren zum Batteriemanagement bekannt, bei dem der Ladezustand mindestens einer Batterie erfasst wird. Der Ladezustand der Batterie ist durch eine Steuereinheit veränderbar. Durch die Veränderung des Ladezustandes kann ein Ausgleich der Ladespannungen erfolgen.

Die DE 10 2015 109168 A1 beschreibt ein weiteres Verfahren zur Beeinflussung des Ladezustandes einer Batterie.

Ein weiterer Stand der Technik wird in den Dokumenten US 2014/285022 A1 sowie DE 10 2014 106795 A1 beschrieben.

Aufgabe der vorliegenden Erfindung ist es, ein Verfahren der einleitend genannten Art derart zu verbessern, dass die Lebenszeit der Batterien verlängert werden kann.

Diese Aufgabe wird erfindungsgemäß durch die Merkmalskombination von Patentanspruch 1 gelöst.

Insbesondere ist daran gedacht, dass jeder Batterie ein Steuermodul derart zugeordnet ist, dass bei einer Mehrzahl von relativ zueinander in Reihe geschalteten Batterien durch eine Veränderung des Ladezustandes mindestens einer der Batterien eine Vergleichsmäßigung der Ladespannungen der einzelnen Batterien erreicht ist.

Die erfindungsgemäße Batterie kann für unterschiedliche spezielle Einsatzanforderungen konzipiert werden. Beispielsweise ist an Notstromanwendungen und die Telekommunikation gedacht. Ebenfalls ist es möglich, eine Verwendung im Bereich von Anlagen für unterbrechungsfreie Stromversorgungen sowie bei stationären Hochspannungsanlagen vorzusehen.

Gemäß bevorzugten Ausführungsformen erfolgt eine Aufzeichnung vitaler Batteriedaten, insbesondere für einen Zeitraum von zehn Jahren. Ebenfalls ist bevorzugt an eine berührungslose Datenübertragung gedacht, bevorzugt über Kommunikation im Nahfeld (NFC).

Darüber hinaus ist auch an eine Datenübertragung über Smartphone, insbesondere unter Verwendung von Android gedacht.

Die Batterie kann in Abhängigkeit von der Batteriekapazität mit einem Topterminal oder mit einem Frontterminal versehen werden.

Über spezielle Anwendungsprogramme wird eine grafische Anzeige von Messwerten unterstützt. Ebenfalls kann über spezielle Anwendungen eine sofortige Auswertung des Batteriezustandes vorgesehen sein.

Das erfindungsgemäße Verfahren sowie die erfindungsgemäße Vorrichtung ermöglichen es, bei Hochspannungsanwendungen eine Erhöhung der Lebensdauer der eingesetzten Batterien um bis zu etwa 50 % zu erreichen. Darüber hinaus ist es bei Hochspannungsanwendungen möglich, eine Kapazitätserhöhung in einem Bereich bis zu 20 % zu erreichen. Durch eine realisierte galvanische Trennung wird erreicht, dass die Module in ein Netzwerk mit einem beliebigen Massepotential eingebunden werden können. Dies unterstützt ein kontinuierliches Auslesen von Daten.

Im Bereich der Batterieanschlüsse kann bevorzugt vorgesehen sein, hier Kupferverbinder sowie Schraubenbolzen zu verwenden. Als Gewindegröße für die Schraubenbolzen hat sich M5 bewährt, da hierdurch eine flache Bauweise unterstützt ist.

Verschiedene Ausführungsbeispiele und Ausgestaltungen der Erfindung sind in den nachfolgenden Figuren abgebildet. Es zeigen
- Figur 1:: ein Blockschaltbild zur Veranschaulichung einer Kommunikation über optische Fasern, insbesondere Toslink Token Ring Kommunikation (Toslink ist eine Marke von Toshiba),
- Figur 2:: ein Blockschaltbild zur Veranschaulichung eines aktiven Ausgleichsverfahrens unter Verwendung eines Master-Slave-Betriebes,
- Figur 3:: eine perspektivische Darstellung eines Steckverbinders im Leistungsbereich,
- Figur 4:: eine perspektivische Darstellung eines anderen Steckverbinders im Leistungsbereich,
- Figur 5:: eine perspektivische Darstellung eines Steckverbinders für ein anschließbares Messkabel,
- Figur 6:: eine perspektivische Darstellung einer Batterie mit Überwachungsmodul,
- Figur 7:: eine Draufsicht auf Leistungsanschlüsse einer Batterie,
- Figur 8:: eine schematische Draufsicht einer Batterie,
- Figur 9:: eine schematische Darstellung einer Kontaktierung und
- Figur 10:: einen schematischen vereinfachten Vertikalschnitt.

Das erfindungsgemäße Verfahren und eine erfindungsgemäße Vorrichtung können optional mit diversen der nachfolgend aufgeführten Ausführungsvarianten einzeln oder in Kombination miteinander realisiert werden. Insbesondere ist daran gedacht, als Batterien Bleiakkumulatoren zu verwenden. Für eine Kommunikation und den Informationsaustausch kann ein Toslink Token Ring eingesetzt werden. Als Messfrequenz für die Erfassung des Ladezustandes und/oder der Ladespannung kann eine Frequenz bevorzugt von oberhalb 250 Hz, besonders bevorzugt in einem Bereich von etwa 1 KHz verwendet werden. Die Signalübertragung kann beispielsweise optisch über Lichtleiter erfolgen. Gemäß einer bevorzugten Ausführungsform erfolgt eine Integration des Steuermoduls in das Batteriegehäuse und/oder in den Batteriedeckel. Weiterhin wird bevorzugt eine Erfassung und Auswertung von Rippel-Spannungen durchgeführt, dies sind insbesondere Oberwellen.

Alle nachfolgend erläuterten Ausführungsvarianten des Verfahrens und der Vorrichtung können jeweils separat oder in beliebigen Kombinationen verwendet werden.

Gemäß weiteren Ausführungsformen erfolgen eine Kapazitätsmessung und/oder eine Temperaturmessung. Hinsichtlich des Ausgleiches der Ladezustände der Batterien ist insbesondere an die Durchführung eines aktiven Ladungsausgleiches gedacht.

Gemäß einer weiteren Ausführungsvariante erfolgt über entsprechende Sensoren und die Verwendung eines Speichers eine Langzeiterfassung von Batteriedaten. Insbesondere ist daran gedacht, die Datenerfassung bereits mit der Produktion der Batterie zu beginnen und speziell auch Transport- und Lagerzeiten messtechnisch zu erfassen. Bevorzugt erfolgt die Langzeiterfassung über die gesamte Lebensdauer der Batterie, beispielsweise über 10 Jahre je Stunde ein Datensatz.

Ein Auslesen der erfassten Daten kann aus dem Speicher beispielsweise unter Verwendung der RFID-Technologie erfolgen.

Gemäß einer weiteren Ausführungsvariante erfolgt eine Messung des Innenwiderstandes der Batterie.

Das erfindungsgemäße Verfahren und die Vorrichtung dienen sowohl zur Analyse von aktuellen Zuständen der Batterien als auch zur Wartung und zur Aufrechterhaltung der Betriebsfähigkeit. Anwendungen sind sowohl im Rahmen einer Erstausrüstung als auch im Rahmen eines Retrofits möglich.

Gemäß besonderen Ausführungsvarianten ist daran gedacht, den einzelnen Modulen eine eindeutige Identifikationsnummer zuzuordnen und hierdurch eine automatische Adressierung zu unterstützen.

Eine Aktualisierung von Software ist im verbauten Zustand möglich und erfolgt über den Systembus.

Alternativ zur bereits erwähnten Verwendung für Bleiakkumulatoren ist auch eine Anwendung für Lithium-Batterien möglich.

Zur Vermeidung von Funktionsstörungen bzw. einem Abbrennen ist ein spezieller Schutz des Moduls als Sicherungsschutz realisiert. Zur Vermeidung einer Sicherungskalibrierung kann eine vier-polige Messung verwendet werden. Allgemein können aber auch Lichtwellenleiter verwendet werden.

Durch die bereits erwähnte Kommunikation über Lichtleitfasern ist es möglich, eine rauschfreie Datenkommunikation zu realisieren. Dies ist insbesondere bei einer Implementierung für ATEX-Module vorteilhaft. Ein ATEX-Modul kann beispielsweise als externes Modul realisiert werden.

Bei der bereits erwähnten Token Ring Kommunikation werden separate Dateneingaben und Datenausgaben für jedes Modul verwendet. Es kann eine hohe Datenübertragungsrate bei einer hohen Anzahl an Modulen realisiert werden.

Die bereits erwähnte Rippelspannung bildet eine Wechselspannungskomponente auf der Ausgangsspannung einer USV-Anlage. Eine zu große Rippelspannung führt hierbei zu einer Reduzierung der Lebensdauer der Batterie. Erfindungsgemäß werden entsprechende Rippelspannungen identifiziert und gemeldet bzw. bei der Steuerung berücksichtigt. Die Größe einer Rippelspannung korrespondiert zu einer Alterung der USV-Anlage.

Bei der erfindungsgemäßen Erfassung der Batteriekapazität wird jede Zelle berücksichtigt.

Die erfindungsgemäße Batteriekonstruktion wird nachfolgend abgekürzt häufig als SMARTBATTERY bezeichnet. Das Batteriemanagement wird nachfolgend kurz als BACS bezeichnet.

Konzipiert wurde die SMARTBATTERY bevorzugt für den Einsatz im Hochspannungsbereich (Akkus in Reihenschaltung bis 1000 Volt) und für Hochsicherheitsanwendungen, in denen es auf die 100%tige Verfügbarkeit jeder Zelle ankommt. Die SMARTBATTERY besitzt gemäß einer Ausführungsform eine Kapazität von 7Ah/C20-mit technisch identischen Daten wie der PANASONIC Typ LC-R127R2PG. Der auf der VRLA-Technologie basierende Bleiakkumulator in verschlossener Bauform ist für die horizontale sowie auch vertikale Einbauvariante geeignet. Zur optimalen Stromübertragung dienen zwei M5 Schraub-Terminals mit optimalen Kupferverbindern. Auf Kundenwunsch wird die Batterie optional mit den herkömmlichen FASTON-Steckverbindungen ausgerüstet.

Das Designlife nach EUROBAT beträgt 6 bis 9 Jahre, abhängig vom Einsatzbereich und den Umgebungsbedingungen. Die SMARTBATTERY präsentiert sich in einem modernen Gehäuse sowie mit einer innovativen Konzeption der Plattentechnologie und der chemischen Zusammensetzung für höchste Zuverlässig- und Langlebigkeit. Durch die robuste Bleitechnik und einer lebenslangen Kontrolle der Batteriedaten ist es möglich, ein zuverlässiges Batteriesystem mit interessanter Preisgestaltung anzubieten.

Soll das Batterierisiko bei einer USV oder anderen Anwendungen ausgeschlossen werden, müssen Akkus mit Überwachungstechnik und Regelungstechnik verwendet werden. Durch die Einführung von hocheffizienten USV-Systemen mit IGBT-Technologie können Wirkungsgrade über 95% erzielt werden. Um die hohen Spannungen erzeugen zu können, benötigt man eine Vielzahl von Akkus in Reihenschaltung. Ist ein Akku defekt, besteht die Gefahr, dass andere Akkus negativ beeinflusst werden und das gesamte System unbemerkt in einen kritischen Zustand gerät, den die USV nicht erkennen kann.

Die Zellen mit kleiner Bauweise (7Ah) sind unverzichtbar im USV-Bereich, lassen sich auf Grund ihrer Menge und Unzugänglichkeit aber schwer kontrollieren und stellen dadurch einen besonderen Schwachpunkt dar. Die sicherste Speichertechnologie in diesen Hochverfügbarkeitssystemen bildet der Akku mit Bleitechnologie, besser als Lithium! Bleibatterien sind wenig reaktionsfreudig, so dass es bei einem Defekt nur selten zu einer Überhitzung und der Gefahr eines Brandes kommt und diese Technologie ist dadurch milliardenfach im Einsatz.

Die Verwendung von weit aus teureren Lithium-Zellen birgt die Gefahr einer Überhitzung mit Brandgefahr in sich. Dieses Risiko kann auch nicht mit dem Einsatz von Spannungsverteilung und Zellüberwachung ausgeschlossen werden.

Der in der SMARTBATTERY integrierte SMARTLOGGER ist die Schnittstelle zwischen Batterie und Anwender. Durch dieses Konzept ist es möglich, jede SMARTBATTERY berührungslos, mit Hilfe eines Smartphones oder NFC READERs zu überprüfen. Bis zu einem Abstand von 3 cm kann man mit Einsatz der Nahfeldkommunikation "NFC" die wichtigsten Daten ganz einfach und berührungsfrei abgreifen. Auf der extra für diese Aufgabe konzipierte SMARTBATTERY APP werden die Daten optisch übersichtlich dargestellt. Bei einem Batterietest wird die Entladekurve in extrem kurzen Messintervallen aufgezeichnet und in einem Kurzzeitspeicher bereitgehalten. Die Daten können danach für 1 Woche abgeholt und analysiert werden. Damit lassen sich geschädigte Akkus zweifelsfrei ermitteln und früh genug austauschen bevor andere Akkus geschädigt werden. Die wichtigsten Betriebsdaten jeder SMARTBATTERY werden bis zu 10 Jahre unlöschbar gespeichert.

In die SMARTBATTERY ist eine Halterungsvorrichtung eingebunden, mit der eine Systemerweiterung möglich ist. Mit dem optionalen Einsatz der Produkte iBACS/iBACS PRO ("i" für integriert) steht dem Anwender neben einer über das Netzwerk verfügbaren Datenkontrolle, ein erfolgreiches Batterie-Management-System BACS zur Verfügung. Dabei wirkt das System auf den jeweiligen Akku ein, um die maximale Kapazität und Lebensdauer herauszuholen. Das "Equalizing" (Balancing im englischen Sprachraum) liefert bis zu 20% mehr Kapazität im Akkustrang und verlängert die Nutzungsdauer der SMARTBATTERY bis zum Designlife und darüber hinaus. Das entspricht einer bis zu 50% längeren Gebrauchsdauer als ohne Einsatz von iBACS ! Alternativ zu BACS können aber auch andere Battery Monitoring Systeme angebunden werden. Mit iBACS/iBACS PRO können die Akku-Messwerte neben der NFC Wireless Schnittstelle auch über den "BACS" Bus abgegriffen werden. Die Steuereinheit des Batterie-Management-Systems (z.B. BACS) kommuniziert dabei mit dem jeweiligen Modul über den SMARTLOGGER. Sollten sich die Batteriedaten außerhalb der eingestellten Grenzwerte bewegen, wird ein Alarm abgegeben.

Die VRLA Akkus sind keine "BlackBox" mehr, sondern ein messbarer Energiespeicher mit extrem hoher Zuverlässigkeit und langer Lebensdauer in kritischen Sicherheitssystemen! Die Bleibatterien jedes Akkuherstellers können nun mit geringem elektronischen Einsatz bis zu 20% mehr Kapazität/Leistung und bis zu 50% mehr Lebensdauer aufweisen. Ein weiteres großes Plus ist ihre Zuverlässigkeit. Kein Akku anderer Chemie ist stabiler als Blei. Auch bezüglich Nachhaltigkeit ist Blei führend, da sich eine Bleibatterie bis zu 95% recyceln lässt, eine Lithium Batterie gar nicht.

Schwache und defekte Akkus werden vor dem Einbau erkannt und eliminiert. Die Technik NFC eignet sich ideal zur Batteriekontrolle im Wareneingang sowie zum Schnellcheck kurz vor dem Einbau oder während des Wartungsfensters.

Die Daten liefern historische Informationen. Dadurch kann der Anwender zurück verfolgen, welche Daten der Akku in der Vergangenheit geliefert und wie er sich beim letzten Entladungsbetrieb verhalten hat. So werden z.B. nach einer Entladung und Wiederaufladung die Akkudaten ausgewertet und der Anwender erhält ein genaues Entladungsprofil und Aufladungsprofil. Anhand dieser Daten kann er dann entscheiden, ob der Akku im Verband bleiben kann oder nicht.

Der Aufbau der SMARTBATTERY verfügt, im Gegensatz zu üblichen 7Ah-Batterien, über einen 100% berührungssicheren Aufbau! Durch Einsatz der NFC Technologie können Messdaten berührungslos und einfach ermittelt werden. Der Berührungsschutz stellt ein erhebliches Sicherheitsmerkmal dar, wodurch aber eine Messung mit üblicher Technik schwierig ist.

Ein besonderes Sicherheitsfeature ist der Einsatz von Hochspannungssicherungen für die Messleitungen und Versorgungsleitungen zwischen dem Akku, dem SMARTLOGGER und dem iBACS/ iBACS PRO. Alle BACS-Generationen besitzen eingebaute Sicherungen, die verhindern, dass bei einem defekten Akku die Ladeenergie über das Modul läuft und es zu einer Überhitzung kommt. Durch den Einsatz von Hochspannungssicherungen in der SMARTBATTERY in Kombination mit iBACS/iBACS PRO und BACS ist das Akkusystem das sicherste System am Markt. Die Sicherungen werden bei iBACS/iBACS PRO mitgeliefert und bei der Montage vom Anwender in die auf dem SMARTLOGGER befindlichen Halterungen eingelegt. Durch die betriebsrelevante Sicherheit werden neue Maßstäbe im Gegensatz zu Lithium- Batterien oder Battery Monitoring Systemen ohne derartige Technik gesetzt.

Die Datenübertragungsgeschwindigkeit bei iBACS/iBACS PRO zählt zu den schnellsten ihrer Art. Gegenüber der Vorgängergeneration von BACS oder der Leistung von Wettbewerbern auf dem Markt hat iBACS/iBACS PRO und BACS den schnellsten Datenbus, mit Messungsintervallen jedes Akkus von < 1.25 Sekunden.

Durch Alterserscheinung der Bauteile, entwickeln USV-Geräte im Laufe der Betriebsdauer, erhebliche Störungen. Diese können dazu führen das die Akkus geschädigt werden und die Messungen von Batterieüberwachungssystemen nicht möglich sind. Durch eine galvanische Trennung jedes BACS Modules können Störungen keinen Einfluss mehr auf den Bus nehmen, da nun die Kupferkabel nicht mehr als Antenne wirken können.

Durch diese Störfestigkeit ist es BACS möglich, den Anteil der Störungen zu messen und anzuzeigen (Oberwelle, AC Anteil im DC Kreis, im englischen Sprachgebrauch "Ripple" genannt). Der Anwender kann an diesem Wert erkennen ob sein System altert bzw. Wartung benötigt. Die Schädigung von Akkus durch zu hohen Oberwellenanteil kann damit verhindert werden, was wiederum erheblich zur Steigerung der Lebensdauer und Zuverlässigkeit der Akkus und der USV beiträgt.

Der in der SMARTBATTERY integrierte SMARTLOGGER ist die Verknüpfung zwischen Batterie und Anwenderschnittstellen. Er gewährleistet die Zeit- und Logging-Funktionalität über die gesamte Lebensdauer des Akkus. Außerdem stellt er die Daten über eine elektrisch gesicherte Schnittstelle (bis 1000 Volt) für übergeordnete Systeme wie iBACS/iBACS PRO bereit. Der SMARTLOGGER protokolliert jede Stunde die Spannung und Temperatur der Batterie und zeichnet diese über einen Zeitraum von 10 Jahren in einem nicht löschbaren Speicher auf. Darüber hinaus werden die Daten im Sekundentakt im schnellen Speicher parallel aufgezeichnet. Die Daten werden dann nach einer vom Anwender einstellbaren Zeit überschrieben, um damit z.B. Batterietests ausführen zu können. Nach dem Wiederaufladen ist es dann möglich, auf eine umfassende Auswertung zurück zu greifen.

Im Speicher sind weitere wichtige Informationen wie das Herstellungsdatum und die Seriennummer zu finden. Die Seriennummer befindet sich zusätzlich auf einem Etikett an der Oberseite der Batterie.

Die Aufzeichnung der Akku-Daten beginnt eine Stunde nach der Produktion und der abschließenden Qualitätsprüfung und endet erst nach 10 Jahren-lange nach dem Ende des Designlife der Batterie.

Der SMARTLOGGER besitzt eine "NFC" Near Field Communication-Schnittstelle, mit der eine drahtlose Kommunikation nach dem Transponder Prinzip möglich ist. Dabei handelt es sich um ein passives NFC-Tag, das beispielsweise in Kreditkarten für kontaktloses Bezahlen verwendet wird. Diese Low-Power- Kommunikation vermeidet Funkzertifizierungen wie Sie z.B. bei WLAN, Bluetooth usw. notwendig wären. Damit werden Störungen durch andere Geräte, die dieselbe Frequenz nutzen, ausgeschlossen.

Folglich kann NFC weltweit eingesetzt werden. Mit Hilfe eines Android Smartphones oder NFC READERs kann auf den Speicher zugegriffen und die Daten ausgelesen werden.

Ein defekter Akku wird sofort erkannt und kann umgehend ausgetauscht werden. Die optische Anzeige in der Batterie, für eine stattfindende Kommunikation, befindet sich am jeweiligen SMARTLOGGER in Form einer LED. Sie signalisiert zusätzlich, ob sich die Messwerte im Speicher innerhalb der Grenzwerte befinden. Somit kann der Benutzer schon mit dem lediglichen Auflegen eines NFC Transponders erkennen ob der Akku "gesund" ist. Er benötigt dazu keine APP.

Die erfolgreiche Verbindung zwischen Smartphone oder NFC READER und Batterie und die anschließende Übertragung mit NFC wird durch ein optisches und akustisches Signal in der APP bekannt gegeben.

Der SMARTLOGGER liefert dem Anwender sofort eine Beurteilung über die Qualität des Akkus anhand der aufgezeichneten Daten und der Grenzwerte, die im Herstellerwerk des Akkus vorgegeben wurden.

Es existieren 3 Anzeigen:
"GOOD" = der Akku ist in Ordnung, keine Über- oder Unterschreitung von Grenzwerten.
"WARNING" = bei Überschreitung der Schwellenwerte wird die Zeitdauer angezeigt. Der Anwender kann dann entscheiden ob der Akku eingesetzt wird oder ersetzt werden muss.
"BAD" = Bei zu häufigen Grenzwertüberschreitungen in dem Bereich "WARNING" oder bei extremen Abweichungen werden diese mit Datum und Dauer angegeben. Die Batterie sollte auf Grund der vorliegenden Daten nicht im System eingebaut werden und verliert ihre Garantie.

Das schnelle Auslesen vieler Akkus hintereinander ist ebenfalls mit dem Smartphone oder NFC READER möglich. Dafür hält man das Smartphone (oder das NFC READER Tool) nacheinander über den jeweiligen Akku. Die Daten werden nacheinander ausgelesen (bis zu 40 Akkus je Messvorgang) und für die Analyse bzw. für die Übertragung auf einen Windows PC, in bereitgehalten. Alle gespeicherten Batteriedaten sind mit der BACS VIEWER Software des Batterie-Management-Systems BACS kompatibel, worüber sie auch ausgewertet und bearbeitet werden können.

Für die übersichtliche Verwaltung der Protokolle mehrerer Batterien, stehen bis zu 40 Registerkarten zur Verfügung. Jeder Ordner zeigt standardmäßig eine Grafik für Spannung und Temperatur des jeweiligen Akkus an. Werden Schwellenwerte überschritten, ändert sich die Balkenfarbe. Bei mehr als 40 Akkus die mit der APP gemessen werden sollen, ist für jede neue Akkuserie ein eigener Folder anzulegen. Diese Organisation findet über die APP des SMARTPHONEs statt. Eine automatische Analyse ist möglich, so dass der Anwender sofort erkennt ob die Batterie in Ordnung oder defekt ist. Neben der Übertragung auf einen Windows PC mit BACS VIEWER können die Daten auch per Whatsapp oder Email vom Smartphone im EXCEL CSV Format in andere Anwendungen übertragen werden.

Bei der SMARTBATTERY wird für eine Ergänzung lediglich das iBACS/iBACS PRO-Modul in die dafür vorgesehene Halterung geschoben und 2 mitgelieferte Sicherungen in den SMARTLOGGER eingelegt. Der SMARTLOGGER ist die Schnittstelle zwischen der SMARTBATTERY und i-BACS. Die Daten des SMARTLOGGERS werden hierüber in die Life-Daten von BACS integriert. Sollten negative Abweichungen im Spannungsbereich auftreten, findet eine Gegensteuerung über iBACS/iBACS PRO statt. Es steht mehr Kapazität zur Verfügung, weil Über- und Unterladungen ausgeschlossen werden. Die Lebensdauer verlängert sich damit massiv! Bis zu 50% im Vergleich zu einem Batteriesystem ohne Equalizing / Balancing. (Damit wird die maximale Verfügbarkeit des Akkus wie des gesamten Systems erreicht!) Je 2 Kabel verbinden die SMARTBATTERY und das iBACS/iBACS PRO mit dem Nachbarakku. Das letzte Verbindungskabel endet am BACS WEBMANAGER. Er bildet die netzwerkfähige Steuereinheit des Battery Management Systems, welche auch für die Regelung und Datensammlung ins Netzwerk verantwortlich ist.

Die einfachste und kostengünstigste Variante ist das neue "iBACS" = "integriertes BACS". Dabei handelt es sich um ein BACS Modul, welches in die SMARTBATTERY eingeschoben werden kann. Im Unterschied zu iBACS PRO besitzt iBACS keine RI-Messung. Anstatt der RI-Messung werden geschädigte Batterien beim iBACS anhand der Intensität des Equalizingstroms ermittelt. Auch dieser Indikator gibt wertvolle Auskunft über die "Gesundheit" des Akkus.

Durch die Einsparung der RI-Messung ist es möglich, eines der leistungsfähigsten Battery Management Systeme auf dem Markt zu einem extrem günstigen Preis anzubieten!

Das leistungsfähigste Battery Management System ist das neue "iBACS PRO"- das BACS der 4rten Generation als Einschubvariante für die SMARTBATTERY. iBACS PRO verfügt neben der Ermittlung von Temperatur und Ladespannung zusätzlich noch über eine neue hochpräzise Innenwiderstandsmessung, die Messung von Störungen/Ripple und eine Batteriekapazitätsmessung.

Der Zustand jeden Akkus wird nun nicht nur über die Intensität des Equalizings und der Innenwiederstandmessung ermittelt, sondern zusätzlich über die zur Verfügung stehende Kapazität! Die Kapazität wird über eine Messfrequenz ermittelt, die exakt den Ladezustand eines Akkus überträgt. Weist ein Akku eine Kapazität von 7 Ah auf (wie Nennkapazität laut Hersteller), kann er als "Neu" deklariert werden. Ist er aber schon längere Zeit im Einsatz und hat mehrere Entladungen hinter sich wird die Messung geringer ausfallen (z.B. 6.7 Ah). Somit kann die Alterung des Akkus anhand der Kapazitätsmessung verfolgt werden.

Diese Kapazitätsmessung macht die SMARTBATTERY für USV-Hersteller interessant! Die von den USVs übermittelten Daten für Batteriekapazität und Autonomiezeiten sind grobe Richtwerte und haben mit dem tatsächlichen Akkuzustand nichts zu tun. Das wird immer wieder von USV-Anwendern bemängelt und führt dazu das die Akkus deutlich zu früh getauscht werden um Ausfälle zu vermeiden. Mit der beschriebenen Technologie ist es nun möglich die Kapazität des Akkus genau zu messen und zu überwachen. Lediglich die schwächsten Batterien müssen dann ausgetauscht werden um die gewünschte Autonomiezeiten zu erhalten. Diese Akkuüberwachung erlaubt es den USV-Herstellern, Anlagen mit deutlich zuverlässigeren Angaben bzgl. der Laufzeit anzubieten, ein erheblicher Mehrwert gegenüber USVs ohne Kapazitätsmessung!

Das BACS-System ist in der Lage, den Status einzelner Batterien in der Notstromversorgung genau zu bestimmen. Wird ein Problem identifiziert, wird es durch den Ausgleichprozess (in Europa bekannt als "EQUALISATION", im Rest der Welt bekannt als "BALANCING") behoben, ehe sich der Fehler auf das gesamte Batteriesystem auswirken kann. Die Ladespannung jedes Akkumulators wird individuell korrigiert und an die Ladeschlussspannung der Ladeeinheit angepasst. Die Akkumulatoren werden so in dem optimalen Betriebsspannungsbereich gehalten.

Im Bedarfsfall ist die konstante sichere Leistung jeder einzelnen Batterie in einem System unerlässlich, um zu garantieren, dass das Batteriesystem die Last bei einem Stromausfall tragen kann. Aus diesem Grund wurden in der Vergangenheit die Batterien oft überdimensioniert oder ausgetauscht. Kam ein Wechsel der Akkus aus Kostengründen nicht in Frage lief man Gefahr, dass die USV bei Anforderung komplett ausfiel.

Bekannte typische Probleme mit VRLA-Batterien (auch unter dem Namen AGM bekannt) sind Austrocknung, Sulfatierung von Platten, Gitterkorrosion und übermäßige Gasentwicklung, die ursächlich durch unterschiedliche Zellperformance entstehen. Werden keine Gegenmaßnahmen ergriffen, ist der Ausfall des Akkus und im Anschluss der Verlust des gesamten Batteriestranges die Folge. Sollte ein Akku im System defekt sein, und ein Wechsel unverzichtbar sein, so müssen in Anlagen ohne BACS alle anderen Akkus mit ausgetauscht werden. Mit Einsatz von BACS ist das nicht notwendig! Die Differenzen, die bzgl. Alterungsprozessen zwischen neuen und alten Akkus bestehen, werden ausgeglichen - die alten Akkus können weiterverwendet werden.

Neben den Messdaten der Akkumulatoren kann BACS zusätzlich die Umgebungsmesswerte (Temperatur, Luftfeuchtigkeit, Säurefüllstand, Wasserstoffkonzentration, etc.) und andere Systeme (USV, Inverter, Transferschalter, Generatoren, potentialfreie Kontakte, Klimaanlagen etc.) mitverwalten und für automatisierte Alarmierung sorgen.

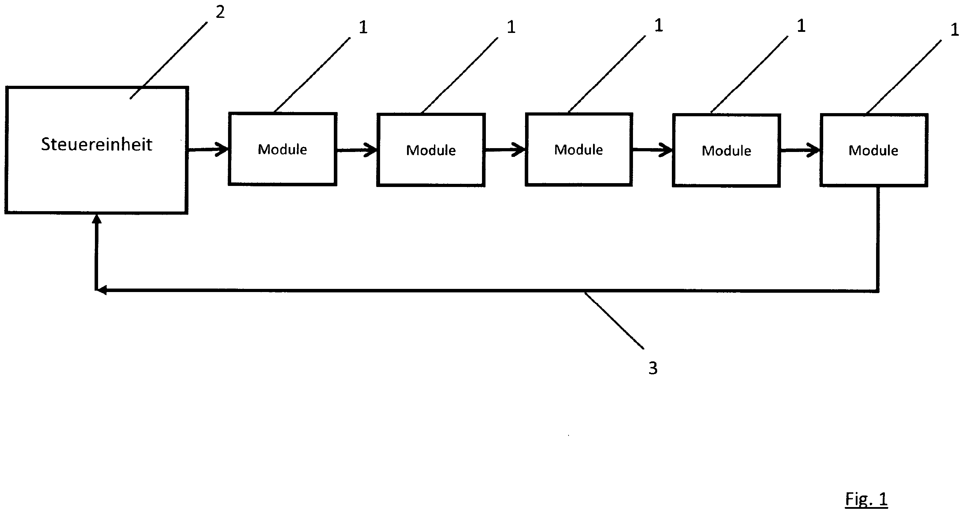

Die Darstellung in Figur 1 veranschaulicht eine Reihenschaltung einer Vielzahl von Batteriemodulen (1) in Kombination mit einer Steuereinheit (2). Die Kommunikation erfolgt bevorzugt über optische Fasern (3).

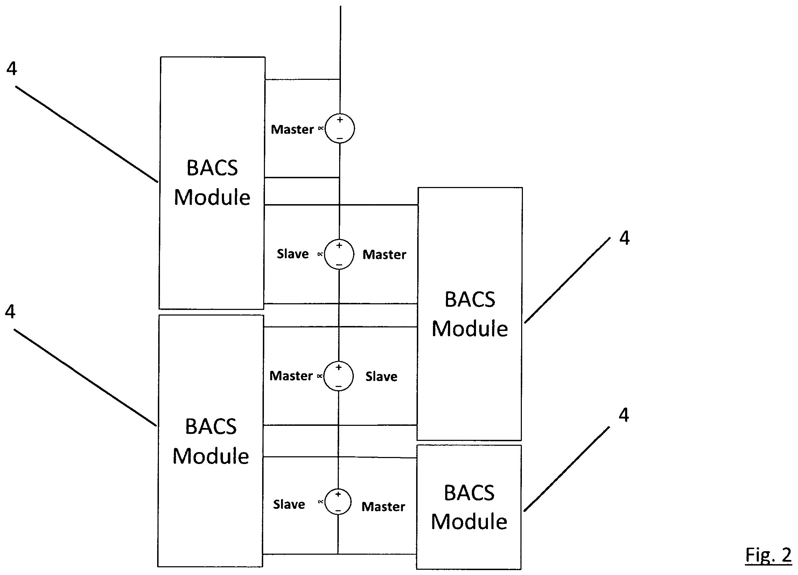

Figur 2 veranschaulicht die Verschaltung einer Mehrzahl von BACS- Modulen (4). Jedes der Module (4) besitzt sowohl eine Slave - als auch eine Master - Batterie. Durch eine entsprechende Ansteuerung wird das aktive Ausgleichen der Ladezustände unterstützt.

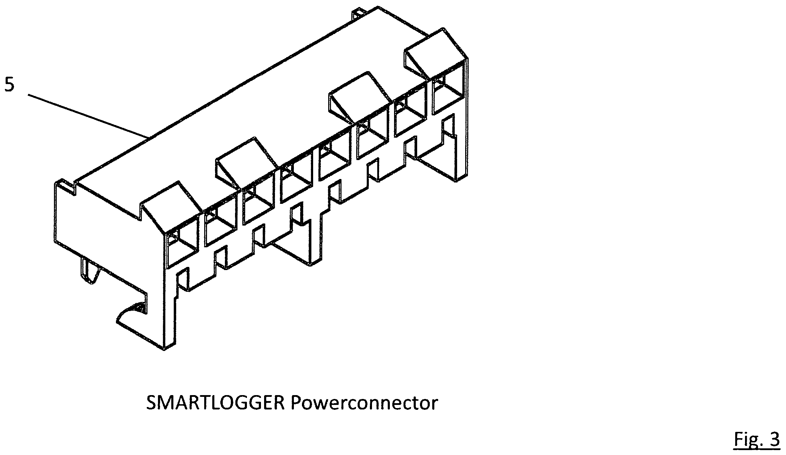

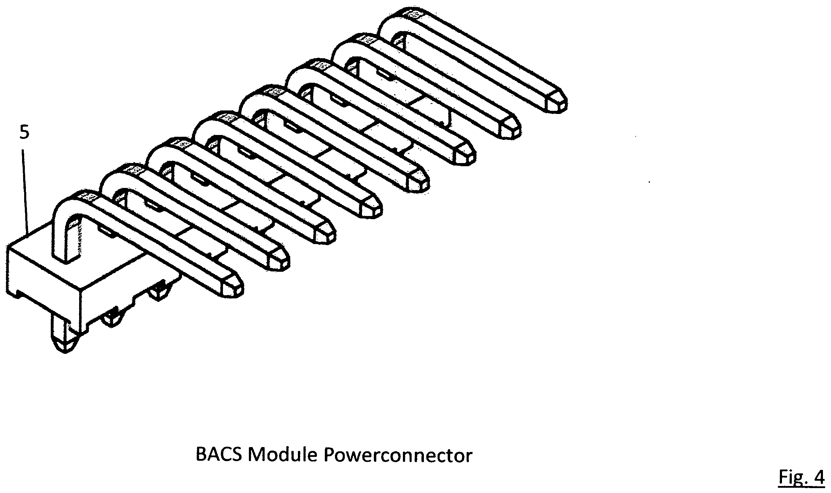

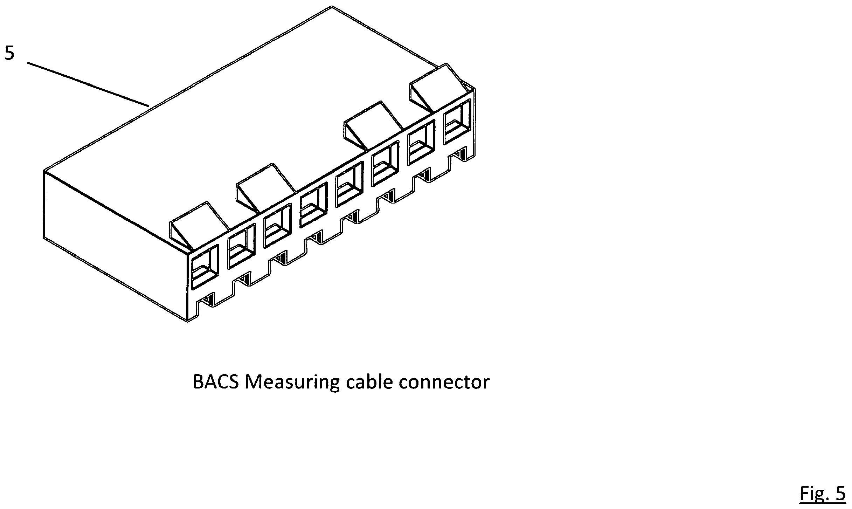

In Figur 3, Figur 4 und Figur 5 werden jeweils Steckverbinder (5) in perspektivischer Darstellung veranschaulicht. Figur 3 zeigt einen Steckverbinder (5) im Leistungsbereich für den Smartlogger, Figur 4 eine entsprechende Konstruktion für BACS Module. Der in Figur 5 dargestellte Steckverbinder (5) ist zur Verwendung im Bereich von Messkabeln vorgesehen.

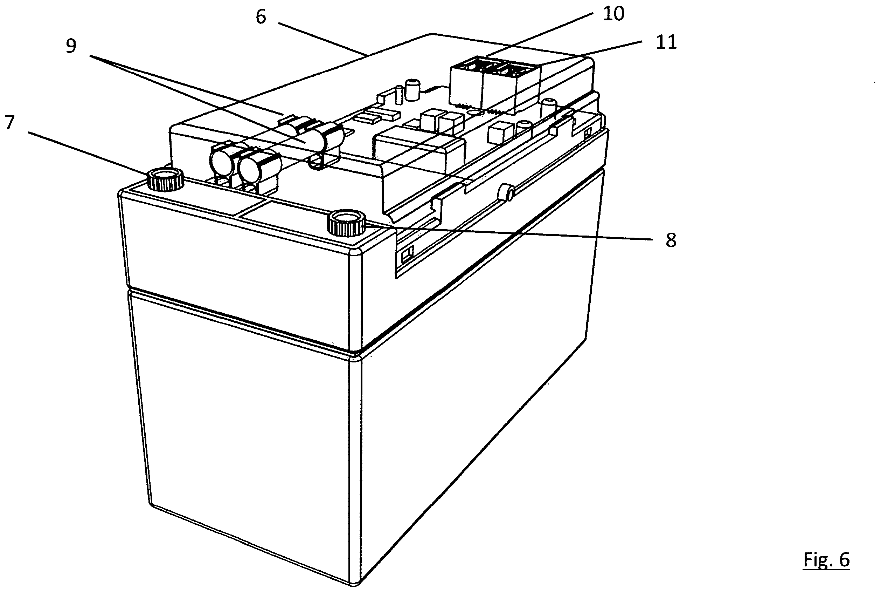

Aus der perspektiven Darstellung in Figur 6 ist zu erkennen, dass das Modul bevorzugt mit einer transparenten oder zumindest teilweise durchsichtigen Abdeckung (6) versehen ist. Batterieanschlüsse (7, 8) weisen bevorzugt innenseitig ein M5 - Innengewinde auf und sind zur Verbindung mit M5 - Schraubenbolzen geeignet.

Zur Unterstützung einer Abtrennung der Steuerung von einer elektrischen Versorgung im Störungsfall ist mindestens eine Schmelzsicherung (9) vorgesehen. Beim dargestellten Ausführungsbeispiel sind zwei Schmelzsicherungen (9) nebeneinander angeordnet.

Die ebenfalls dargestellten Verbindungselemente (10, 11) dienen zur Datenkommunikation mit einem BUS. Eines der Verbindungselemente (10, 11) ist als Datenausgang und das andere als Dateneingang konzipiert.

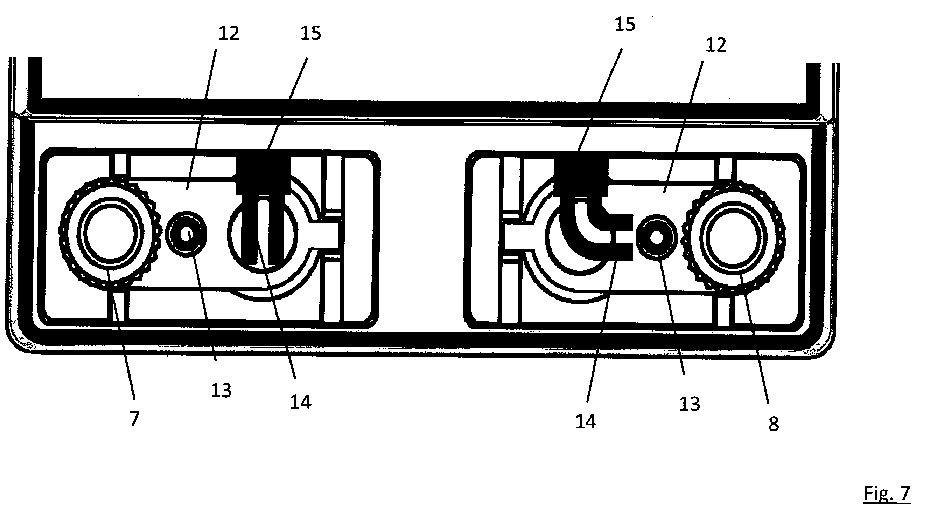

Figur 7 zeigt eine Draufsicht auf die Anschlüsse (7, 8) der Batterie. Zu erkennen sind die eigentlichen Anschlüsse (7, 8) mit einem M5-Innengewinde sowie eine Metallplatte (12), die von einem Stift (13) befestigt ist. An der Metallplatte (12) sind Leiter (14) eines Kabels (15) für das BACS Modul (4) befestigt.

Die dargestellte Anordnung wird ganz oder teilweise nach einer erfolgten Montage mit Kunststoff vergossen.

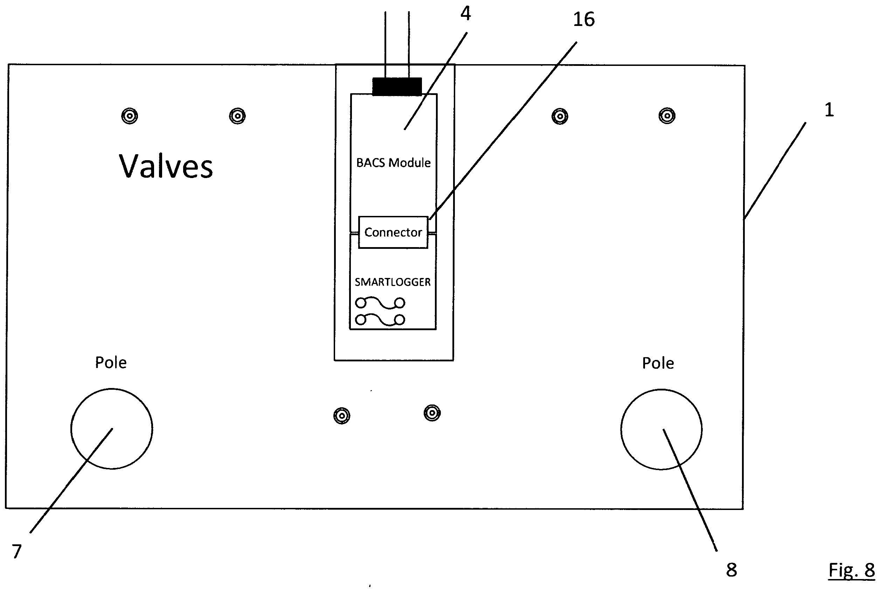

Die Draufsicht in Figur 8 zeigt in einer vereinfachten Darstellung die Anordnung der Lastanschlüsse (7, 8) der Batterie (1), eine Lokalisierung der BACS Module (4) sowie eines Anschlusselementes (16).

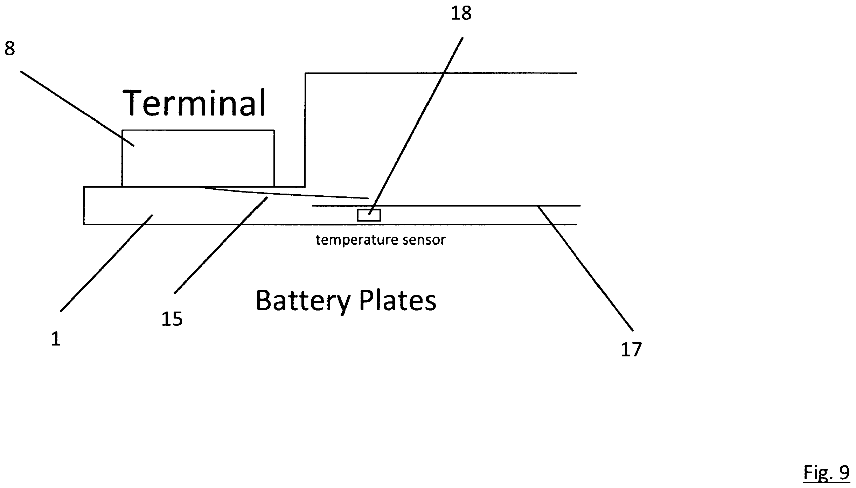

Aus der vereinfachten Darstellung in Figur 9 ist zu erkennen, wie ein Lastanschluss (8) der Batterie (1) über ein Kabel (15) mit einer Platine (17) verbunden sind. Unter Verwendung eines Temperatursensors (18) erfolgt eine Temperaturüberwachung.

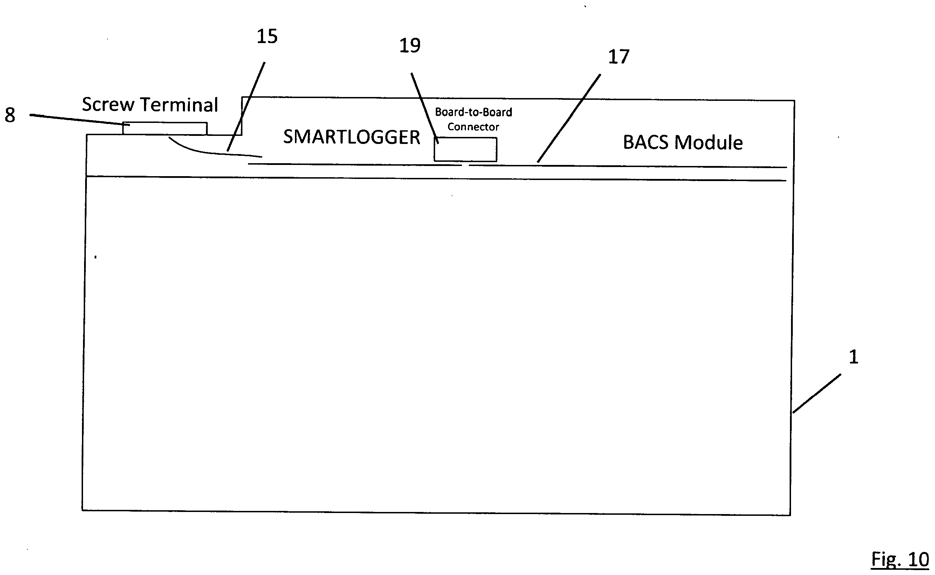

Figur 10 zeigt eine Anordnung ähnlich wie in Figur 9 ohne Temperatursensor und mit einem Anschlusselement (19).

## Patentansprüche

1. Verfahren zum Batteriemanagement, bei dem von mindestens einer Batterie messtechnisch ein Ladezustand erfasst wird und bei dem der Ladezustand der mindestens einen Batterie durch eine Steuereinheit veränderbar ist und bei dem bei einer Mehrzahl von relativ zueinander in Reihe geschalteten Batterien durch die Veränderung des mindestens einen Ladezustandes eine Vergleichmäßigung der Ladespannungen der einzelnen Batterien durchgeführt wird, wobei eine Datenübertragung unter Verwendung von Nahfeldkommunikation, NFC und eine Speicherung aufgezeichneter Daten für einen Zeitraum von etwa zehn Jahren in einem Langzeitspeicher durchgeführt wird und wobei eine galvanische Trennung eine Mehrzahl von Modulen durchgeführt wird und bei dem eine Entladekurve der Batterie in einem Kurzzeitspeicher bereitgehalten wird und bei dem die Batteriedaten nach einer Entladung und Wiederaufladung ausgewertet werden, wobei die gemessenen Daten zusätzlich zu dem nichtlöschbaren Langzeitspeicher mit einer hohen zeitlichen Auflösung im Sekundentakt in einem schnellen Speicher aufgezeichnet werden und eine Anzeige der Messergebnisse unter Verwendung eines Smartphones erfolgt und wobei eine Kapazität der Batterie gemessen und überwacht wird.

2. Verfahren nach Anspruch 1, **dadurch gekennzeichnet, dass** eine optische Übertragung von Daten und/oder Signalen durchgeführt wird.

3. Verfahren nach Anspruch 1 oder 2, **dadurch gekennzeichnet, dass** ein Auftreten von Oberwellen im Gleichstromkreis gemessen wird.

## Claims

1. Method for battery management, in which a state of charge of at least one battery is detected by measurement and in which the state of charge of the at least one battery can be changed by a control unit and in which the charging voltages of the individual batteries of a plurality of batteries connected in series relative to one another are equalized by changing the at least one state of charge, wherein data transmission is carried out using near-field communication, NFC and a storage of recorded data for a period of about ten years in a long-term memory is carried out and wherein a galvanic isolation of a plurality of modules is carried out and wherein a discharge curve of the battery is kept ready in a short-term memory and wherein the battery data is analyzed after a discharge and recharge, wherein the measured data is recorded in addition to the non-erasable long-term memory with a high temporal resolution every second in a fast memory and the measurement results are displayed using a smartphone and wherein a capacity of the battery is measured and monitored.

2. Method according to Claim 1, **characterized in that** an optical transmission of data and/or signals is carried out.

3. Method according to Claim 1 or 2, **characterized in that** the occurrence of harmonics in the DC circuit is measured.

## Revendications

1. Procédé de gestion de batterie, dans lequel un état de charge d'au moins une batterie est détecté par une technique de mesure, et dans lequel l'état de charge de ladite au moins une batterie peut être modifié par une unité de commande, et dans lequel, pour une pluralité de batteries connectées en série les unes par rapport aux autres, une homogénéisation des tensions de charge des batteries individuelles est effectuée au moyen de la modification dudit au moins un état de charge, dans lequel une transmission de données en utilisant une communication en champ proche, NFC, et un stockage de données enregistrées pendant une période d'environ dix ans dans une mémoire à long terme sont effectués, et dans lequel une isolation galvanique d'une pluralité de modules est effectuée, et dans lequel une courbe de décharge de la batterie est fournie dans une mémoire à court terme, et dans lequel les données de batterie sont évaluées après une décharge et une recharge, dans lequel les données mesurées sont enregistrées en plus de la mémoire à long terme non volatile à la seconde avec une haute résolution temporelle dans une mémoire rapide, et un affichage des résultats de mesure est effectué à l'aide d'un smartphone, et dans lequel la capacité de la batterie est mesurée et surveillée.

2. Procédé selon la revendication 1, **caractérisé en ce qu'**une transmission optique de données et/ou de signaux est effectuée.

3. Procédé selon la revendication 1 ou 2, **caractérisé en ce qu'**une apparition d'harmoniques dans le circuit de courant continu est mesurée.
